# EUROPEAN PATENT APPLICATION

(11) **EP 4 344 298 A1**
(43) Date of publication of application: **27.03.2024**
(21) Application number: 22853482.2
(22) Date of filing: 04.08.2022
(51) Int. Cl.: H04W 36/00

(54) **METHOD AND APPARATUS FOR UPDATING CONFIGURATION OF CONDITIONAL PSCELL CHANGE IN NEXT-GENERATION MOBILE COMMUNICATION SYSTEM**

(30) Priority: 05.08.2021 KR 20210103237; 20.10.2021 KR 20210140235
(71) Applicant: Samsung Electronics Co., Ltd., Suwon-si, Gyeonggi-do 16677 (KR)
(72) Inventor: HWANG, June, Suwon-si, Gyeonggi-do 16677 (KR); AGIWAL, Anil, Suwon-si, Gyeonggi-do 16677 (KR)
(74) Representative: Nederlandsch Octrooibureau
(86) International application number: PCT/KR2022/011541
(87) International publication number: WO 2023/014106

(57) **Abstract**

The present disclosure relates to a communication method and system for converging a 5^{th}-Generation (5G) communication system for supporting higher data rates beyond a 4^{th}-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services. The present disclosure provides a method and apparatus for updating a configuration of a conditional PSCell change.

## Description

### [Technical Field]

The disclosure relates to a next-generation mobile communication system or wireless communication system. Specifically, the disclosure relates to an operation of updating the configuration of a conditional PSCell change in case where the configuration of a source primary secondary cell group (SCG) cell (PSCell) is changed in a conditional mobility operation of a terminal.

### [Background Art]

To meet the demand for wireless data traffic having increased since deployment of 4G communication systems, efforts have been made to develop an improved 5G or pre-5G communication system. Therefore, the 5G or pre-5G communication system is also called a `Beyond 4G Network' or a `Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Meanwhile, with the development of mobile communication systems, a demand for a method for efficiently updating conditional cell change configuration is increasing.

### [Disclosure of Invention]

### [Technical Problem]

The technical object to be achieved by the embodiments of the disclosure is as follows. In the case of inter-secondary node (SN) conditional PScell change, in case where the configuration of the source pscell is changed in a situation where the conditional pscell change configuration has already been given to a terminal, the corresponding configuration change is reflected so that the configuration of a current master cell group (MCG) and master node (MN), and the configuration of a target pscell must all be able to be changed.

Currently, there are only two signaling systems between the source SN, MN, and target SN nodes: a procedure for configuring inter-SN conditional PSCell Change (CPC) and a procedure for updating the configuration of the source SN. Among these procedures, the inter-SN CPC configuration does not allow the change of the MN/MCG configurations, and the source SN configuration update procedure does not allow updating the CPC configuration of a target SN. Therefore, a procedure that allows both of these updates must exist to enable updating of the MN/MCG configurations with respect to the changes in the source SN configuration of the inter-SN and updating of the CPC configuration of the target SN.

### [Solution to Problem]

A method for controlling a master node (MN) in a wireless communication system according to an embodiment of the disclosure comprise in case where conditional primary secondary cell group (SCG) cell (PSCell) change (CPC) is previously configured for a terminal, and if a secondary node (SN) configuration is updated in a source SN, receiving a first message including information on updated SN configuration and a CPC configuration update indication; updating MN configuration information previously configured based on the updated SN configuration information; transmitting a second message requesting a target SN that operates a candidate target pscell for the terminal for which the CPC is previously configured to update the CPC configuration for the candidate target pscell, based on the CPC configuration update indication included in the first message, wherein the second message includes the CPC configuration update indication; and receiving a third message including the updated CPC configuration information from the target SN in case where the CPC configuration for the candidate target pscell is updated by the target SN.

A method for controlling a source secondary node (SN) in a wireless communication system according to another embodiment of the disclosure comprises updating SN configuration in a source SN in case where conditional primary secondary cell group (SCG) cell (PSCell) change (CPC) is previously configured for a terminal; and transmitting, to a master node (MN), a first message including information on updated SN configuration and a CPC configuration update indication, wherein if MN configuration information previously configured is updated based on information on the updated SN configuration, a second message requesting a target SN that operates a candidate target pscell for the terminal for which the CPC is previously configured to update the CPC configuration for the candidate target pscell is transmitted based on the CPC configuration update indication included in the first message, wherein the second message includes the CPC configuration update indication, and a third message including the updated CPC configuration information from the target SN is transmitted to the MN, in case where the CPC configuration for the candidate target pscell is updated by the target SN.

A master node (MN) in a wireless communication system according to another embodiment of the disclosure comprises a transceiver; and a controller controlled to, in case where conditional primary secondary cell group (SCG) cell (PSCell) change (CPC) is previously configured for a terminal, and if a secondary node (SN) configuration is updated in a source SN, receive a first message including information on updated SN configuration and a CPC configuration update indication, through the transceiver; update MN configuration information previously configured based on the updated SN configuration information; transmit a second message requesting a target SN that operates a candidate target pscell for the terminal for which the CPC is previously configured to update the CPC configuration for the candidate target pscell, based on the CPC configuration update indication included in the first message, through the transceiver, wherein the second message includes the CPC configuration update indication; and receive a third message including the updated CPC configuration information from the target SN through the transceiver, in case where the CPC configuration for the candidate target pscell is updated by the target SN.

A source secondary node (SN) in a wireless communication system according to another embodiment of the disclosure comprises a transceiver; and a controller controlled to update SN configuration in a source SN in case where conditional primary secondary cell group (SCG) cell (PSCell) change (CPC) is previously configured for a terminal, and transmit, to a master node (MN), a first message including information on updated SN configuration and a CPC configuration update indication, through the transceiver, wherein if MN configuration information previously configured is updated based on information on the updated SN configuration, a second message requesting a target SN that operates a candidate target pscell for the terminal for which the CPC is previously configured to update the CPC configuration for the candidate target pscell is transmitted based on the CPC configuration update indication included in the first message, wherein the second message includes the CPC configuration update indication, and a third message including the updated CPC configuration information from the target SN is transmitted to the MN, in case where the CPC configuration for the candidate target pscell is updated by the target SN.

### [Advantageous Effects of Invention]

According to embodiments of the disclosure to solve the above-described problem, in case where the configuration of the source SN is changed, the source SN notifies the MN of this change, and if the source SN has previously transmitted the CPC configuration to the terminal, the source SN notifies the MN of the situation including the corresponding CPC configuration update indication. The MN updates the MN/MCG configuration in response to the indication, requests the target SN to update the CPC configuration, receives the update information back, and transmits, to the terminal, the update information including the updated source SN/MN/MCG configuration and CPC configuration.

According to these embodiments, in the case of dual connection (dual connectivity, or DC), in case of configuring an inter-SN CPC to the terminal, MN/MCG configurations reflecting the change in configurations of the source SN, and the CPC configuration of a target-SN can be updated through the inter-node signals, and by transmitting each updated configuration through one RRC message, the CPC configuration of the terminal and target SN can be synchronized.

### [Brief Description of Drawings]

FIG. 1 is a diagram illustrating the structure of an LTE system according to an embodiment of the disclosure.
FIG. 2 is a diagram illustrating the structure of radio protocols in an LTE system according to an embodiment of the disclosure.
FIG. 3 is a diagram illustrating the structure of a next-generation mobile communication system according to an embodiment of the disclosure.
FIG. 4 is a diagram illustrating the structure of radio protocols in a next-generation mobile communication system according to an embodiment of the disclosure.
FIG. 5 is a diagram illustrating a secondary node (SN) configuration update process related to an embodiment of the disclosure.
FIG. 6 is a diagram illustrating an SN configuration update process related to an embodiment of the disclosure.
FIG. 7 is a diagram illustrating an SN configuration update process related to an embodiment of the disclosure.
FIG. 8 is a block diagram illustrating a structure of a terminal according to an embodiment of the disclosure.
FIG. 9 is a block diagram illustrating a structure of a base station according to an embodiment of the disclosure.

### [Mode for the Invention]

Hereinafter, preferred embodiments of the disclosure will be described with reference to the accompanying drawings. In the accompanying drawings, the same reference numerals denote the same elements. Additionally, well known functions or structures may not be described or illustrated in detail to avoid obscuring the subject matter of the disclosure.

In describing the exemplary embodiments of the disclosure in the present specification, a description of technical contents which are well known to the art to which the disclosure belongs and are not directly connected with the disclosure will be omitted. This is to more clearly transfer a gist of the disclosure by omitting an unnecessary description.

For the same reason, some components are exaggerated, omitted, or schematically illustrated in the accompanying drawings. Further, the size of each component does not exactly reflect its real size. In each drawing, the same or corresponding components are denoted by the same reference numerals.

Various advantages and features of the disclosure and methods accomplishing the same will become apparent from the following detailed description of embodiments with reference to the accompanying drawings. However, the disclosure is not limited to the embodiments disclosed herein but will be implemented in various forms. The embodiments have made disclosure of the disclosure complete and are provided so that those skilled in the art can easily understand the scope of the disclosure. Therefore, the disclosure will be defined by the scope of the appended claims. Like reference numerals throughout the description denote like elements.

Herein, it will be understood that each block of the flowchart illustrations, and combinations of blocks in the flowchart illustrations can be implemented by computer program instructions. These computer program instructions may be mounted on the processor of a general purpose computer, special purpose computer or other programmable data processing apparatus, so that the instructions executed by the processor of the computer or other programmable data processing apparatus create means for executing the functions specified in the flowchart block(s). These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable data processing apparatus to produce a computer implemented process such that the instructions that execute on the computer or other programmable data processing apparatus provide steps for implementing the functions specified in the flowchart block(s).

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Here, the term 'unit' used in the present embodiment means software or hardware components such as FPGA and ASIC and the 'unit' performs any roles. However, the meaning of the 'unit' is not limited to software or hardware. The 'unit' may be configured to be in a storage medium that may be addressed and may also be constituted to reproduce one or more processor. Accordingly, for example, the 'unit' includes components such as software components, object oriented software components, class components, and task components and processors, functions, attributes, procedures, subroutines, segments of program code, drivers, firmware, microcode, circuit, data, database, data structures, tables, arrays, and variables. The functions provided in the components and the 'units' may be combined with a smaller number of components and the 'units' or may be further separated into additional components and 'units'. In addition, the components and the 'units' may also be implemented to reproduce one or more CPUs within a device or a security multimedia card.

In the following description, the terms indicating access nodes, network entities, messages, interfaces between network entities, and various identification information are used for convenience of explanation of the disclosure. Accordingly, the terms used in the following description are not limited to specific meanings and they may be replaced by other terms that are equivalent in technical meaning.

In the following description, the terms and definitions given in the 3^{rd} Generation Partnership Project Long Term Evolution (3GPP LTE) standard and new radio (NR) rule are used for convenience of explanation. However, the disclosure is not limited by the terms and definitions, and it can be applied to other standard systems in the same manner.

In various embodiments of the disclosure, a master node (MN) may be interpreted as a master base station, and a secondary node (SN) may be interpreted as a secondary base station. Further, in various embodiments of the disclosure, the MN and SN may be interpreted as different base stations, may be interpreted as base stations using different radio access technologies (RATs), and may be used as base stations using the same RAT in some cases. The MN and SN may be distinguished using generic terms such as a first base station, a second base station, and the like.

In various embodiments of the disclosure, a radio resource control (RRC) message transmitted by the MN may be called an MN RRC message. In addition, an RRC message generated by the SN may be called an SN RRC message.

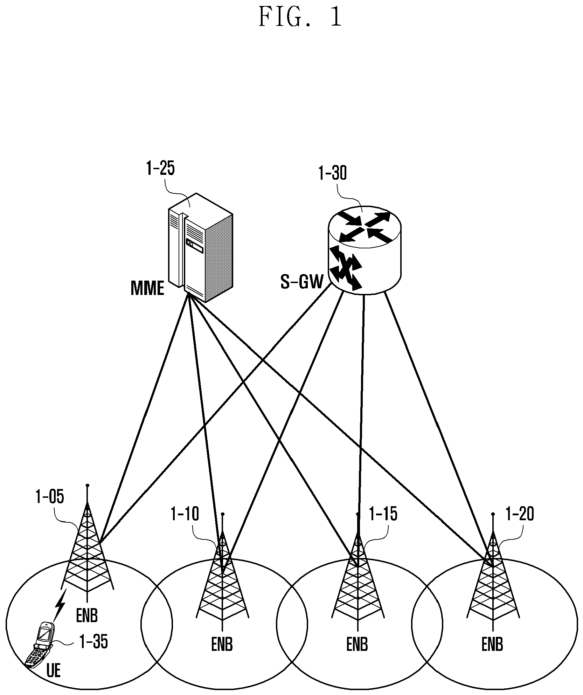

FIG. 1 is a diagram illustrating the structure of an LTE system according to an embodiment of the disclosure.

With reference to FIG. 1, as illustrated, the radio access network of a long term evolution (LTE) system may include a next-generation base station (evolved node B (hereinafter, ENB), Node B or base station) 1-05, 1-10, 1-15, 1-20, a mobility management entity (MME) 1-25, and a serving-gateway (S-GW) 1-30. A user equipment (hereinafter, UE or terminal) 1-35 may connect to an external network through the ENB 1-05 to 1-20 and the S-GW 1-30.

In FIG. 1, the ENBs 1-05 to 1-20 may correspond to existing Node Bs of an UMTS system. The ENB is connected to the UE 1-35 through a radio channel, but may perform more complex functions in comparison to an existing Node B. In the LTE system, all user traffic including real-time services like Voice over IP (VoIP) services may be served through shared channels. Hence, an apparatus is needed to perform scheduling on the basis of collected status information regarding buffers, available transmit powers and channels of the UEs, and the ENBs 1-05 to 1-20 can be responsible for this. One ENB may control multiple cells in a typical situation. To achieve a data rate of, for example, 100 Mbps in a bandwidth of, for example, 20 MHz, the LTE system may utilize orthogonal frequency division multiplexing (OFDM) as radio access technology. Also, the LTE system may apply adaptive modulation and coding (AMC) to determine the modulation scheme and channel coding rate according to channel states of the UE. The S-GW 1-30 is an entity providing data bearers, and may create and remove data bearers under the control of the MME 1-25. The MME 1-25 is an entity in charge of various control functions including a mobility management function for the UE 1-35, and may be connected to a plurality of ENBs 1-05 to 1-20.

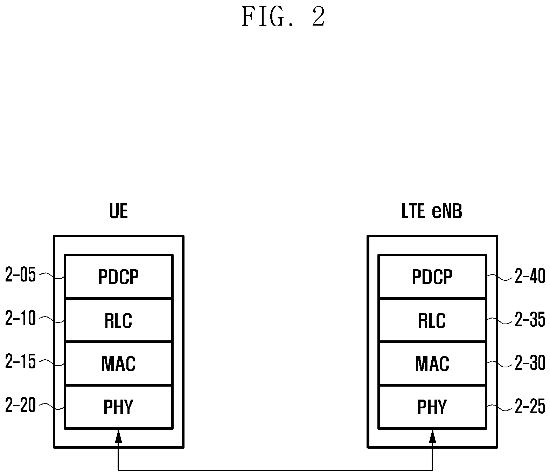

FIG. 2 is a diagram illustrating the structure of radio protocols in an LTE system according to an embodiment of the disclosure.

With reference to FIG. 2, in a UE or an ENB, the radio protocols of the LTE system may include packet data convergence protocol (PDCP) 2-05, 2-40, radio link control (RLC) 2-10, 2-35, and medium access control (MAC) 2-15, 2-30, respectively. The PDCP 2-05, 2-40 may perform compression and decompression of IP headers. The main functions of the PDCP 2-05, 2-40 may be summarized as follows.
- Header compression and decompression function (Header compression and decompression: ROHC only)
- User data transfer function (Transfer of user data)
- In-sequence delivery function (In-sequence delivery of upper layer PDUs at PDCP re-establishment procedure for RLC AM)
- Reordering function (For split bearers in DC (only support for RLC AM): PDCP PDU routing for transmission and PDCP PDU reordering for reception)
- Duplicate detection function (Duplicate detection of lower layer SDUs at PDCP re-establishment procedure for RLC AM)
- Retransmission function (Retransmission of PDCP SDUs at handover and, for split bearers in DC, of PDCP PDUs at PDCP data-recovery procedure, for RLC AM)
- Cipher and decipher function (Ciphering and deciphering)
- Timer-based SDU discard function (Timer-based SDU discard in uplink.)

The radio link control (RLC) 2-10, 2-35 may reconfigure PDCP packet data unit (PDU) to a suitable size and perform automatic repeat request (ARQ) operation. The main functions of the RLC 2-10, 2-35 may be summarized as follows.
- Data transfer function (Transfer of upper layer PDUs)
- ARQ function (Error Correction through ARQ (only for AM data transfer))
- Concatenation, segmentation and reassembly function (Concatenation, segmentation and reassembly of RLC SDUs (only for UM and AM data transfer))
- Re-segmentation function (Re-segmentation of RLC data PDUs (only for AM data transfer))
- Reordering function (Reordering of RLC data PDUs (only for UM and AM data transfer)
- Duplicate detection function (Duplicate detection (only for UM and AM data transfer))
- Error detection function (Protocol error detection (only for AM data transfer))
- RLC SDU discard function (RLC SDU discard (only for UM and AM data transfer))
- RLC re-establishment function (RLC re-establishment)

The MAC 2-15 or 2-30 may be connected with multiple RLC layer entities constituted in one UE, and it may multiplex RLC PDUs into MAC PDUs and demultiplex MAC PDUs into RLC PDUs. The main functions of the MAC 2-15, 2-30 may be summarized as follows.
- Mapping function (Mapping between logical channels and transport channels)
- Multiplexing and demultiplexing function (Multiplexing/demultiplexing of MAC SDUs belonging to one or different logical channels into/from transport blocks (TB) delivered to/from the physical layer on transport channels)
- Scheduling information reporting function (Scheduling information reporting)
- HARQ(hybrid automatic repeat request) function (Error correction through HARQ)
- Priority handling function between logical channels (Priority handling between logical channels of one UE)
- Priority handling function between UEs (Priority handling between UEs by means of dynamic scheduling)
- MBMS service identification function (MBMS service identification)
- Transport format selection function (Transport format selection)
- Padding function (Padding)

The physical (PHY) layer 2-20, 2-25 may convert higher layer data into OFDM symbols by means of channel coding and modulation and transmit the OFDM symbols through a radio channel, or it may demodulate OFDM symbols received through a radio channel, perform channel decoding, and forward the result to a higher layer.

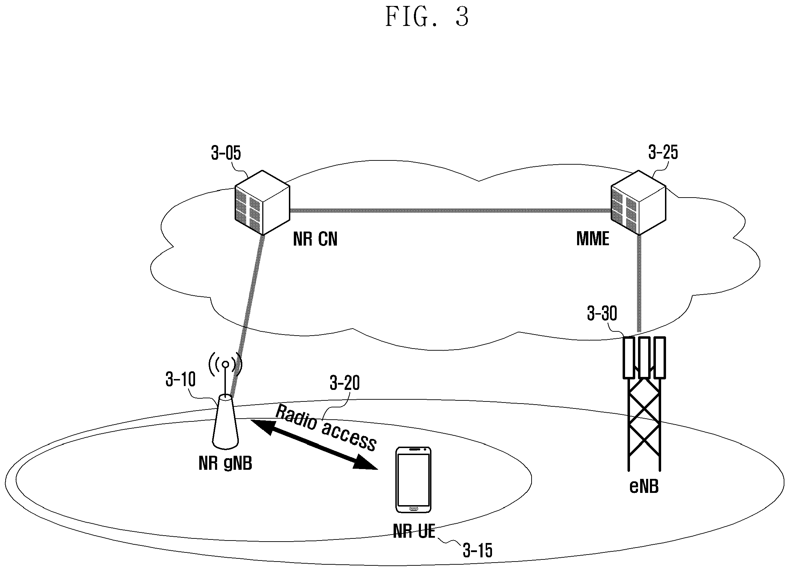

FIG. 3 is a diagram illustrating the structure of a next-generation mobile communication system according to an embodiment of the disclosure.

With reference to FIG. 3, the radio access network of the next-generation mobile communication system (hereinafter, NR or 5G) may include a next-generation base station (new radio node B (hereinafter, gNB), NR NB, NR gNB, or NR base station) 3-10 and a next-generation new radio core network (new radio core network, NR CN) 3-05. A next-generation new radio user equipment (NR UE or terminal) 3-15 may connect to an external network through the NR gNB 3-10 and the NR CN 3-05.

In FIG. 3, the NR gNB 3-10 may correspond to an evolved node B (eNB) of the existing LTE system. The NR gNB 3-10 may be connected to the NR UE 3-15 through a radio channel, and it can provide a more superior service than that of the existing node B. All user traffic may be serviced through shared channels in the next-generation mobile communication system. Hence, there is a need for an entity that performs scheduling by collecting status information, such as buffer states, available transmission power states, and channel states of UEs, and the NR NB 3-10 may take charge of this. One NR gNB may control a plurality of cells. In the next-generation mobile communication system, to implement ultra-high-speed data transmission compared with current LTE, a bandwidth beyond the existing maximum bandwidth may be utilized. Also, a beamforming technology may be additionally combined with orthogonal frequency division multiplexing (OFDM) serving as a radio access technology. Further, an adaptive modulation and coding (AMC) scheme determining a modulation scheme and channel coding rate to match the channel state of the UE may be applied. The NR CN 3-05 may perform functions such as mobility support, bearer configuration, and quality of service (QoS) configuration. The NR CN 3-05 is an entity taking charge of not only mobility management but also various control functions for the UE, and may be connected to a plurality of base stations. In addition, the next-generation mobile communication system may interwork with the existing LTE system, and the NR CN 3-05 may be connected to the MME 3-25 through a network interface. The MME 3-25 may be connected to the existing base station, eNB 3-30.

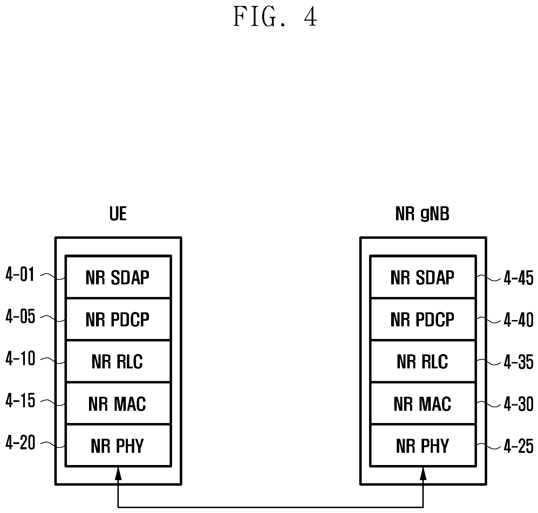

FIG. 4 is a diagram illustrating the structure of radio protocols in a next-generation mobile communication system according to an embodiment of the disclosure.

With reference to FIG. 4, in a UE and an NR gNB, the radio protocols of the next-generation mobile communication system may include NR service data adaptation protocol (SDAP) 4-01, 4-45, NR PDCP 4-05, 4-40, NR RLC 4-10, 4-35, and NR MAC 4-15, 4-30, respectively.

The main functions of the NR SDAP 4-01, 4-45 may include some of the following functions.
- User data transfer function (transfer of user plane data)
- Mapping function between QoS flows and data bearers for uplink and downlink (mapping between a QoS flow and a DRB(data radio bearer) for both DL and UL)
- QoS flow ID marking function for uplink and downlink (marking QoS flow ID in both DL and UL packets)
- Function of mapping reflective QoS flow to data bearer for uplink SDAP PDUs (reflective QoS flow to DRB mapping for the UL SDAP PDUs).

With respect to the SDAP layer entity, the UE may be configured with, through a radio resource control (RRC) message, whether to use a header of the SDAP layer entity or whether to use a function of the SDAP layer entity for each PDCP layer entity, bearer, or logical channel. In case where a SDAP header is configured, the UE may use a non-access stratum (NAS) reflective quality of service (QoS) configured 1-bit indication and access stratum (AS) reflective QoS 1 configured 1-bit indication of the SDAP header to indicate an update or reconfiguration of the mapping information between QoS flows and data bearers for the uplink and downlink. The SDAP header may include QoS flow ID information indicating the QoS. The QoS information may be used as data processing priority and scheduling information for supporting smooth services.

The main function of the NR PDCP 4-05, 4-40 may include some of the following functions.
- Header compression and decompression function (Header compression and decompression: ROHC only)
- User data transfer function (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Cipher and decipher function (Ciphering and deciphering)
- Timer-based SDU discard function (Timer-based SDU discard in uplink.)

In the above description, the reordering function of the NR PDCP entity may mean reordering function of PDCP PDUs received from a lower layer in order based on the PDCP sequence number (SN). The reordering function of the NR PDCP entity may include delivering data to a higher layer in reordered sequence, directly delivering data without considering the order, recording lost PDCP PDUs through reordering, reporting the status of lost PDCP PDUs to the transmitting side, and requesting retransmission of the lost PDCP PDUs.

The main function of the NR RLC 4-10, 4-35 may include some of the following functions.
- Data transfer function (Transfer of upper layer PDUs)
- In-sequence delivery function (In-sequence delivery of upper layer PDUs)
- Out-of-sequence delivery function (Out-of-sequence delivery of upper layer PDUs)
- ARQ function (Error Correction through ARQ)
- Concatenation, segmentation and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

In the above description, in-sequence delivery function of the NR RLC entity may mean in-sequence delivery function of RLC SDUs received from a lower layer to a higher layer. In-sequence delivery function of the NR RLC entity may include reassembly and delivery of RLC SDUs in case where several RLC SDUs belonging to one original RLC SDU are received after segmentation.

In-sequence delivery function of the NR RLC entity may include function of reordering of received RLC PDUs based on the RLC sequence number (SN) or the PDCP SN, recording lost RLC PDUs through reordering, reporting the status of the lost RLC PDUs to the transmitting side, and requesting retransmission of the lost RLC PDUs.

In case where there is a lost RLC SDU, in-sequence delivery function of the NR RLC entity may include in-sequence delivery function of only RLC SDUs before the lost RLC SDU to a higher layer.

Although there is a lost RLC SDU, if a specified timer has expired, in-sequence delivery function of the NR RLC entity may include in-sequence delivery function of all the RLC SDUs received before the starting of the timer to a higher layer.

Although there is a lost RLC SDU, if a specified timer has expired, in-sequence delivery function of the NR RLC entity may include in-sequence delivery function of all the RLC SDUs received up to now to a higher layer.

The NR RLC entity may process RLC PDUs in the order of reception regardless of the order of the sequence number, and transfer them to the NR PDCP entity.

In case of receiving a segment, the NR RLC entity may reconstruct one whole RLC PDU from segments stored in the buffer or received later, and transfer it to the NR PDCP entity.

The NR RLC layer may not include a concatenation function, which may be performed by the NR MAC layer or may be replaced with a multiplexing function of the NR MAC layer.

In the above description, out-of-sequence delivery function of the NR RLC entity may mean a function of transferring RLC SDUs received from a lower layer directly to a higher layer regardless of their order. In case where several RLC SDUs belonging to one original RLC SDU are received after segmentation, out-of-sequence delivery function of the NR RLC entity may include reassembly and delivery function of the RLC SDUs. Out-of-sequence delivery function of the NR RLC entity may include the functions of storing the RLC SNs or PDCP SNs of received RLC PDUs and ordering them to record lost RLC PDUs.

The NR MAC 4-15, 4-30 may be connected to several NR RLC layer entities constituted in one entity, and the main function of the NR MAC 4-15, 4-30 may include some of the following functions.
- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Priority handling function between logical channels (Priority handling between logical channels of one UE)
- Priority handling function between UEs (Priority handling between UEs by means of dynamic scheduling)
- MBMS service identification function (MBMS service identification)
- Transport format selection function (Transport format selection)
- Padding function (Padding)

The NR PHY 4-20, 4-25 may compose OFDM symbols from higher layer data through channel coding and modulation and transmit them through a radio channel, or may demodulate and channel-decode OFDM symbols received through a radio channel and forward the result to a higher layer.

In various embodiments of the disclosure, a case of the mention of dual connection may include both LTE-NR dual connectivity (ENDC) of a case where a core network is an evolved packet core (EPC) and multi-RAT dual connectivity (MRDC) of a case where a core network is 5GC, and includes operations of a network and terminal according to RATs of an MN and SN, accordingly. In case of NR-DC, the core network is 5GC.

Hereinafter, the following abbreviations may be used in the disclosure.
SN: secondary node
MN: master node
MCG: master cell group
SCG: secondary cell group
Pcell: primary cell
Pscell: Primary SCG (secondary cell group)cell
SCell: secondary cell
SpCell: special cell
CHO: conditional handover
CPC: conditional pscell change
S-SN: source SN
T-SN: target SN
SNModReq: SN Modification Required message
SNChangeReq: SN Change Required message
SNAddReq: SN Addition Request message
SNAddReqACK; SN Addition Request Acknowledge message
SNModConfirm: SN Modification Confirm message

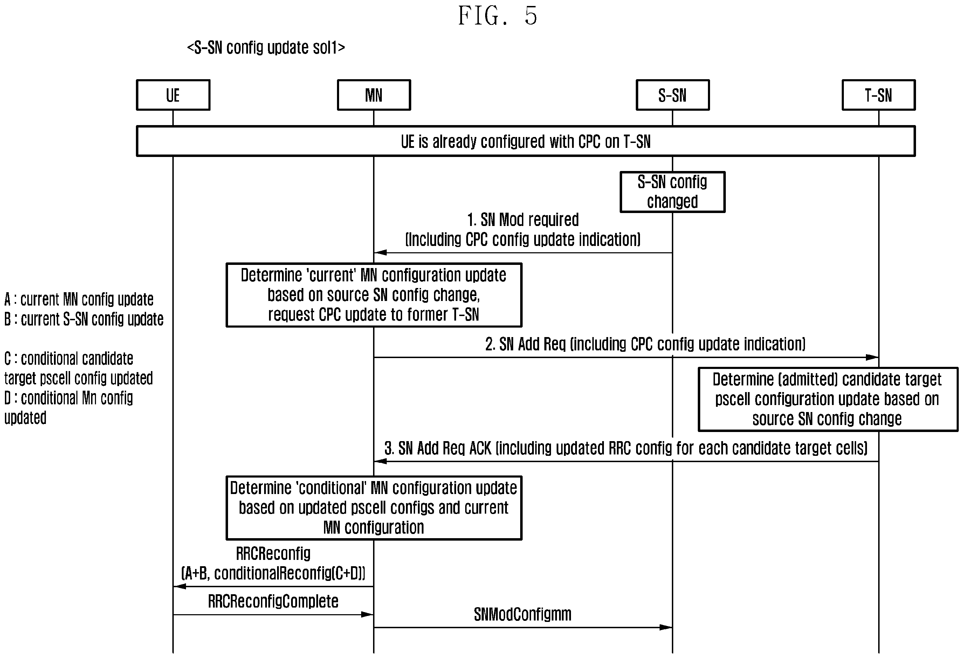

FIG. 5 is a diagram illustrating a secondary node (SN) configuration update process related to an embodiment of the disclosure. FIG. 5 illustrates a case of updating CPC configuration using a S-SN modification required message.

After the CPC configuration is given to the UE, that is, in a situation where the CPC configuration for a corresponding UE is maintained/managed in the S-SN, MN, and T-SN, a case where a change in the S-SN configuration occurs is explained.
- The S-SN may transmit configuration change request information by delivering the SNModReq message to the MN. The SNModReq message may include the following information.
- Information requesting SCG bearer modification/release, modification/release of SCG RLC bearer of split bearer, or Pscell change (for security key change, PDCP recovery, etc.) in an X2/Xn related field.
- Information included in an RRC container part may include RRC configuration information (octet string) to be changed, as S-SN configuration information.
- In the X2/Xn related fields CPC configuration update indication is included.
- The operations of the MN receiving the above message may include the following.
- The MN reflects the SCG configuration change request information existing in the X2/Xn part and performs modifications to the current MN configuration information. This modification may be addition/modification/release of the bearer, and in relation to this modification, PDCP recovery, PDCP version change instruction, or bearer type change to split bearer may be performed. During this process, if necessary, the MN may transmit the SN modification request back to the SN to perform the necessary request. Additionally, the MN may update the MCG configuration information provided to the UE.
- If the CPC configuration update indication is included, the RRC configuration information to be changed of the received S-SN is delivered to the T-SN operating each candidate target pscell corresponding to the existing CPC configuration of the UE indicated in the received message. Also, for each candidate target pscell, it is requested to update the existing CPC configuration based on the configuration information of the received S-SN.
- In this case, the message used by the MN to deliver to the T-SN may be SNAddReq. Alternatively, it could be a separate new X2/Xn message.
- In case of using the SNAddReq message for CPC update, the SNAddReq message may include the CPC candidate target cell id and frequency information previously configured in the UE.
- The SNAddReq message may include an indication indicating CPC configuration modification. The T-SN that has received this indication updates the previously configured CPC candidate target cell configuration information based on the new configuration information of the received S-SN for the candidate target pscell that has been admitted for the corresponding UE.
- The T-SN may deliver the updated CPC configuration information to the MN by including it in the SNAddReqACK message. In this case, an updated RRC message may be included for each admitted candidate target cell, or, in case where the CPC configuration information is not updated, a 1-bit indication indicating that the configuration for each candidate target cell is the same as the existing configuration may be included.
- In case of receiving the above message from the T-SN, the MN may store the following information in its RRCReconfiguration message and deliver it to the UE.
- A: configuration information to be updated for the S-SN, that is, delta signal compared to an existing S-SN configuration
- B: MN's updated configuration information considering the update of the S-SN, delta signal compared to an existing MCG configuration
- C: updated configuration information of candidate target pscell reflecting the configuration update of the S-SN
- D: the above C, that is, updated configuration information of MCG reflecting updated configuration information of candidate target pscell
- Among these, C and D are included in a conditionalReconfiguratoin field, are indicated by a specific ID, and are applied in case where a specific condition associated with one candidate target pscell is satisfied. The specific ID is a conditional reconfiguration ID determined by the MN, and in case where the UE already has a conditional reconfiguration indicated by the corresponding ID, it is updated with the newly received C and D.

After receiving the RRCReconfiguration message, the given configuration is applied and the conditionalReconfiguration is updated, and then, the UE transmits the RRCReconfigurationComplete message to the Mn. After receiving this message, the MN may deliver an SN Modification confirm (complete) message to the S-SN, thereby informing the S-SN that all requested changes to the S-SN configuration have been completed

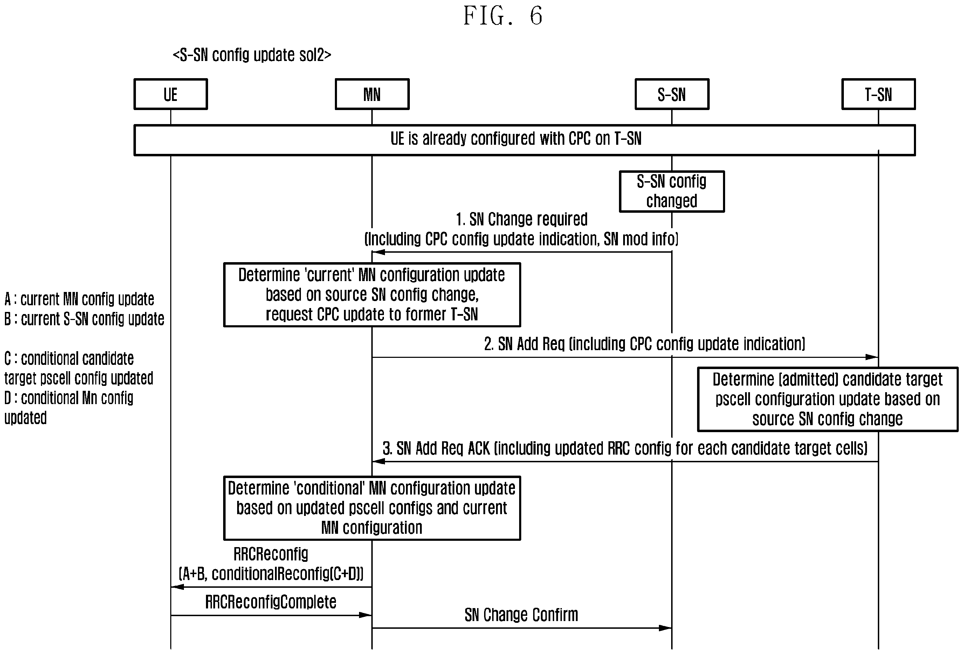

FIG. 6 is a diagram illustrating an SN configuration update process related to an embodiment of the disclosure. FIG. 6 is an embodiment of updating a CPC configuration using the S-SN change required message.

In the embodiment illustrated in FIG. 6, after a CPC configuration is given to the UE, for example, in a situation where the CPC configuration for the corresponding UE is maintained/managed in the S-SN, MN, and T-SN, a case where a change in the S-SN configuration occurs is explained.
- The S-SN may transmit configuration change request information by sending a SNChangeReq (e.g., SN change request) message to the MN. For example, the S-SN may determine to change the S-SN configuration. Also, the SNChangeReq message may be transmitted to the MN based on the change in S-SN configuration.

The SNChangeReq message may include the following information.
- Information requesting SCG bearer modification/release, modification/release of SCG RLC bearer of split bearer, or Pscell change (for security key change, PDCP recovery, etc.) in an X2/Xn related field.

For reference, in addition to the above information, the information described in Table 1 below may be included as the SN configuration change request information. For a description of the information described in Table 1, please refer to TS 38.423.

**[Table 1]**

| |
|---|
| PDCP Change Indication |
| PDU Session Resources To Be Modified List |
| >PDU Session Resources To Be Modified Item |
| >>PDU Session ID |
| >>PDU Session Resource Modification Required Info - SN terminated |
| >>PDU Session Resource Modification Required Info - MN terminated |
| PDU Session Resources To Be Released List |
| >PDU Session Resources To Be Released Item |
| >PDU sessions to be released List - SN terminated |
| >PDU sessions to be released List - MN terminated |
| Required Number of DRB IDs |
| Location Information at S-NODE |
| MR-DC Resource Coordination Information |
| RRC Config Indication |

Information included in the RRC container may include RRC configuration information (octet string) to be changed of the S-SN.
- In the Xn part, CPC configuration update indication may be included.
- The operations of the MN receiving the above message may include the following.
- The MN may perform modification to the current MN configuration information by reflecting the SCG configuration change request information present in the X2/Xn part. The modification may be addition/modification/release of the bearer, and in this regard, the modification may include PDCP recovery, PDCP version change instruction, bearer type change to split bearer, or the like. During this process, if necessary, the MN may transmit the SN modification request back to the SN to perform a necessary request. Additionally, the MN may update the MCG configuration information transmitted to the UE.
- If the CPC configuration update indication is included, the MN may deliver the RRC configuration information to be changed for the received S-SN to the T-SN that operates each candidate target pscell corresponding to the existing CPC configuration possessed by the UE indicated in the received message. Also, for each candidate target pscell, the MN may request the T-SN to update the existing CPC configuration based on the received configuration information of the S-SN.
- In this case, the message used by the MN to deliver to the T-SN may be SNAddReq. Alternatively, it could be a separate new Xn message.
- In case of using the SNAddReq message for CPC update, the SNAddReq message may include the CPC candidate target cell id and frequency information previously configured in the UE.
- The SNAddReq message may include an indication indicating CPC condiguration update. The T-SN that has received the indication indicating the CPC condifuration update may update the previously configured CPC candidate target cell configuration information for the candidate target pscell that has been admitted for the corresponding UE, based on the received new configuration information of the S-SN.
- T-SN may deliver the updated CPC configuration information to the MN by including it in a SNAddReqACK message. In this case, the SNAddReqACK message may include an updated RRC message for each admitted candidate target cell. In case where the update has not been made, the SNAddReqACK message may include a 1-bit indication indicating that the configuration for each candidate target cell is the same as the existing configuration.
- In case of receiving the SNAddReqACK message from the T-SN, the MN may store the following information in its RRCReconfiguration message and deliver it to the UE.
- A: configuration information to be updated for the S-SN, for example, delta signal compared to an existing S-SN configuration
- B: MN's updated configuration information considering the update of the S-SN, delta signal compared to an existing MCG configuration
- C: updated configuration information of candidate target pscell reflecting the configuration update of the S-SN
- D: the above C, for example, updated configuration information of the MCG reflecting the updated configuration information of candidate target pscell
- Among these, C and D are included in a conditionalReconfiguration field and may be indicated with a specific ID. Also, the above C and D may be applied in case where a specific condition associated with one candidate target pscell is satisfied. The specific id is a conditional reconfiguration id determined by the MN, and in case where the UE already has a conditional reconfiguration indicated by the corresponding id, it may be updated with the newly received C and D.
- After receiving the RRCReconfiguration message, the given configuration is applied, and the conditionalReconfiguration is updated, and then, the UE may deliver the RRCReconfigurationComplete message to the Mn. After receiving the RRCReconfigurationComplete message, the MN may deliver an SN change complete message to the S-SN, thereby informing the S-SN that all requested changes to the S-SN configuration have been completed.

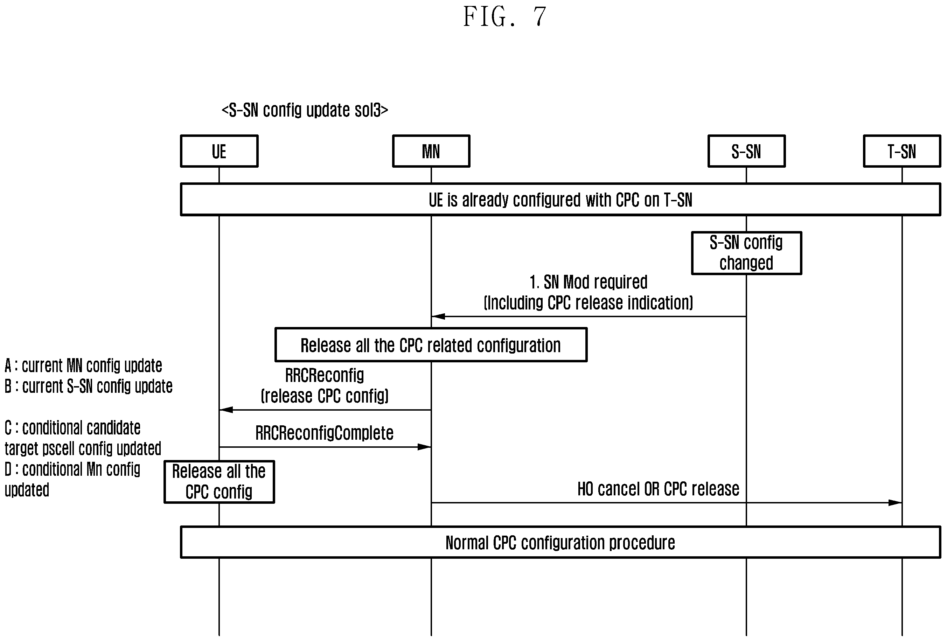

FIG. 7 is a diagram illustrating an SN configuration update process related to an embodiment of the disclosure. FIG. 7 is a case where, after releasing the CPC configuration, a new CPC configuration is made reflecting the configuration to be updated of the S-SN.
a case where, after the CPC configuration is given, a change in the S-SN configuration occurs is explained.

- S-SN delivers a SNModReq message to the MN. In this case, the SNModReq message includes information to be modified (information mentioned in the previous drawing) and may include update configuration information of the S-SN.
- Additionally, the SNModReq message may be transmitted including a CPC release indication. The CPC release indication must be included in an Xn/X2 field.
- The MN may receive the above message and update the configuration information of the MN and MCG in relation to the modification request information of the corresponding S-SN. Also, the MN may deliver to the UE including the updated MN/MCG configuration information and received updated configuration information of the S-SN in RRCReconfiguration. In this case, the MCG configuration information may include a release command given for all CPC configurations that the UE currently has.
- When commanding the conditional reconfiguration release, an indication to release all CPC configs may be transmitted, or release may be requested by directly indicating each condReconfig Id.
- Additionally, in the current S-SN configuration, an indication indicating release of measurement configuration information associated with the CPC configuration may be included in the measurement configuration.

* The UE that has received the RRCReconfiguraiton applies the MN/MCG/SCG configuration information as received and deletes all corresponding CPCs according to the release instruction.
* S-Sn uses a new source configuration and performs a normal CPC configuration procedure. For example, while sending an SN Change Required message to the MN, the S-Sn includes a CPC configuration indication and delivers it to the MN. This message may include a list of candidate target pscells selected by the S-SN and CPC performance conditions for each pscell. Also, the current S-SN configuration may be included in the RRC octet string.
* The MN that has received this information may transmit a SNAddReq message to the candidate target T-SN corresponding to the candidate target pscell included in the received message. The SNAddReq message includes a list of candidate target pscells selected by the S-SN and may include the current configuration of the S-Sn. If the T-SN that has received the SNAddReq message identifies that the corresponding message is for a UE where the T-SN has previously maintained CPC configuration information, the T-SN may delete all CPC configuration information that it has maintained. Also, the T-SN may select a final candidate target pscell from among the received candidate target pscell list of the S-SN based on the measurement result value transmitted from the S-SN to the MN. Also, the T-SN may create a CPC configuration based on S-SN configuration information for selected pscells. Also, the T-SN may deliver to the MN, including the CPC configuration made for the selected candidate target pscells. The MN may map the performance condition, configurations in the target cell, and MCG configuration in case of applying this configuration for each candidate target cell selected in a conditionalReconfiguration field to one conditional Reconfiguration id and deliver it to the UE.
* The UE that has received this message from the MN may store the corresponding conditional reconfiguration information and perform measurement operations according to the performance condition.

In the case of the flowcharts of FIGS. 5 and 6 above, in case where the MN transmits a CPC configuration modification indication in the SNAddReq message to the T-SN, the T-SN may update a preconfigured CPC configuration. In this case, in case where the configuration is the same as the existing CPC, the T-SN may include CG-Config (RRC message referring to CPC configuration) of size 0 in a field including the CPC configuration of a SNAddReqACK message, or may not include the field including the CPC configuration of the SNAddReqACK message at all. Upon receiving the SNAddReqACK message including the container field of the 0 size CG-Config or omitted CG-Config, the MN may recognize that the CPC configuration of the corresponding candidate target pscell is the same as that previously held by the UE. The MN may recognize the 0 size CG-Config field, or if the field including the CPC configuration is not included in SNAddReqACK, the MN may recognize that the CPC configuration information of the corresponding candidate target pscell is the same as the previously delivered content.

In case where the container field including the CPC configuration of each candidate target pscell in the SNAddReqACK message is included as mandatory, another method is for the T-SN to link the CPC configuration of each candidate target pscell to the SNAddReqACK message and transmit the X2/Xn field of the SNAddReqACK by including an ignore indication in the X2/Xn field of the SNAddReqACK. In this case, the MN that has received it may know that there is no change compared to an existing CPC by the ignore indication.

There is a separate CPC configuration change vacancy handling indication in the MN's SNAddReq message. If this indication is included in the SNAddReq message and delivered to the T-SN, when sending a response message to the corresponding MN, the T-SN may not include the CPC configuration or may include an ignore indication, or attach a CG-Config message with 0 bit size, in the container including the CPC configuration.

In the case of FIGS. 5 and 6, the RRCReconfiguration message finally received from the MN may include (A) the current S-SN configuration information, (B) the current MN configuration information considering (A) and MCG configuration information, (C) SCG configuration included in the RRCReconfiguration message associated with an id indicating a specific candidate target pscell in a conditional reconfiguration field, and, for example, (D) CPC configuration and MCG configuration configured in consideration of the above CPC configuration. In case where the UE adds or modifies a specific id of the conditional Reconfiguration field included in the final received RRCReconfiguration message, only C or D may be changed compared to the previous one. For example, in case where the MN requests the CPC configuration or receives a SNAddReqACK message without CPC configuration information from the T-SN that has sent a SNAddReq message requesting change in CPC configuration, the MN may recognize that there is no change information compared to the previous one. However, in case where the request for CPC configuration information update is a change in the original S-SN configuration, and the current MN/MCG configurations are changed due to the change in S-SN configuration, D based on the current MCG configuration, for example, MCG configuration information in the CPC configuration may also be changed. For example, C may not change, but D may change. In this case, the MN stores the C information to be changed in a MCG configuration field in the RRCReconfiguration message to be overwritten, for each candidate target pscell-related ID to be modified, in the conditional Reconfiguration field within the final delivered RRCReconfiguration message. The MN may also deliver unchanged D information to the UE by inserting the existing D information back into the SCG configuration field. Likewise, there is no need to change the C information according to the Mn's judgment, but if new changed configuration information for the D information is received from the T-SN, the MN stores the D information to be changed in the SCG configuration field within the RRCReconfiguration message to be overwritten for each candidate target pscell related ID to be modified. The MN may also deliver unchanged C information to the UE by inserting the existing C information back into the MCG configuration field. In case where the UE receives addition/modification information of the conditional reconfiguration field, the UE may replace the entire RRCReconfiguration message corresponding to id.

In FIGS. 5 and 6, the Xn/X2 message that notifies the MN of the S-SN configuration change, requests the MN to configure the T-SN and CPC, and causes the MN to receive the result may be a message that is a SN Modification Required or SN Change Required message, or a new message of Xn/X2, meaning a separate CPC configuration update. In this case, each piece of information included in the initiation message of FIGS. 5 and 6 may be included as is in this new message.

Hereinafter, separately from the previously described content, another embodiment related to conditional PScell addition/change (CPAC) will be described. In case where the UE performs CPAC, in case where the given T304 timer expires while performing random access to the target cell, pscell addition/change failure may occur. In this case, the UE may select a new candidate target pscell from among the given CPAC candidate target pscells based on the following and perform pscell addition/change with the selected cell.
* After selecting the same cell as the cell selection procedure performed in idle/inactive state, in case where the selected cell is one of the respective candidate target pscells associated with the CPAC configuration, a candidate target pscell
* Among the respective candidate target pscells associated with the respective CPAC configurations, a candidate target cell with the highest measured cell signal strength
* Among the respective candidate target pscells associated with the respective CPAC configurations, any cell among the candidate target cells whose measured cell signal strength is greater than a predetermined threshold value
* Among the respective candidate target pscells associated with the respective CPAC configuration, a cell with the highest strength among the candidate target cells whose measured cell signal strength is greater than a predetermined threshold value
* Among respective candidate target pscells associated with the respective CPAC configurations, among candidate target cells whose measured cell signal strength is greater than a predetermined threshold value, a cell in which the number of beams exceeding a threshold value of a specific beam is more than a predetermined number
* Random cell selected by the UE among the respective candidate target pscells associated with the respective CPAC configurations

In case where there is no cell that satisfies the above-mentioned criteria, the UE may perform a SCGFailureInformation procedure. Alternatively, in case where the above-mentioned criteria are satisfied or the following conditions are satisfied in addition to a case where the cell selected by the UE exists, the UE may perform the SCGFailureInformation procedure.
* In case where there is a cell that satisfies the above-mentioned criteria and the pscell addition/change procedure fails while performing the pscell addition/change procedure on that cell,
* In case where there is a cell that satisfies the above-mentioned criteria, an attempt is made to perform a predefined number of pscell addition/change procedures with that cell, and all execution attempts for that number of times ultimately fail (for reference, after one failed attempt, a T304 timer is restarted, and may be considered as a failure when this timer expires.)
* In case where the result of performing pscell addition/change on a cell that satisfies the above-mentioned criteria is failure, the UE may repeat the pscell addition/change operation by applying the above-mentioned criteria again at the point of failure. In case where the UE repeats this operation more than a defined number of times,

This procedure is a procedure for transmitting a SCGFailureInformation message to the SN through the link of the MN. The SCGFailureInformation message may include measurement result values for each cell and beam of the serving cell and neighboring cells. In case where conditional or non-conditional pscell addition/change is performed and fails, the UE may include an indication indicating conditional or non-conditional pscell addition/change failure in the corresponding message. Additionally, the SCGFailureInformation message may be delivered to the SN, including an indication of the corresponding failed pscell (e.g., at least one of ARFCN, CGI, PCI, and related conditional reconfiguration ID).

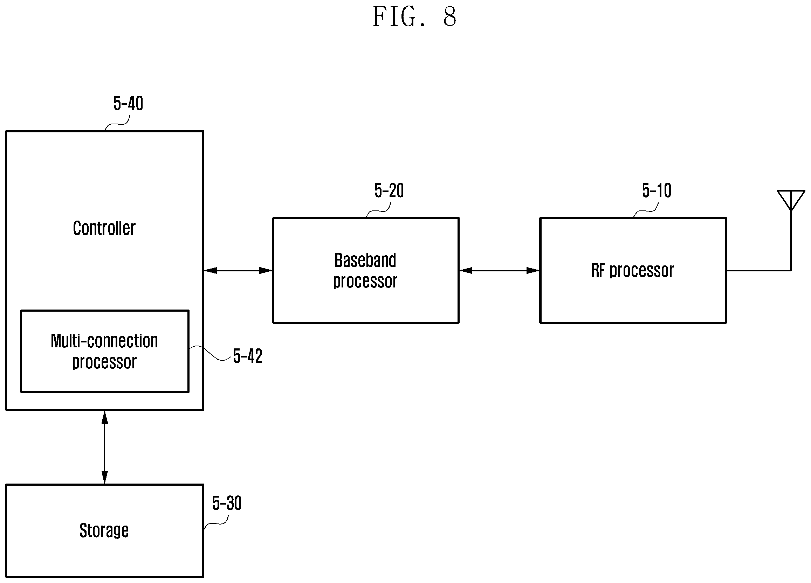

FIG. 8 is a block diagram illustrating an internal structure of a terminal according to an embodiment of the disclosure.

With reference to the diagram, the terminal may include a radio frequency (RF) processor 5-10, a baseband processor 5-20, a storage 5-30, and a controller 5-40. In addition, the controller 5-40 may further include a multi-connection processor 5-42.

The RF processor 5-10 performs a function, such as signal band change, amplification, etc., for transmitting or receiving a signal through a wireless channel. That is, the RF processor 5-10 upconverts a baseband signal provided from the baseband processor 5-20, into an RF band signal, and then transmits the RF band signal through an antenna, and downconverts the RF band signal received through the antenna, into a baseband signal. For example, the RF processor 5-10 may include a transmission filter, a reception filter, an amplifier, a mixer, an oscillator, a digital-to-analog converter (DAC), an analog-to-digital converter (ADC), and the like. In the diagram, only one antenna is illustrated, but the terminal may include a plurality of antennas. In addition, the RF processor 5-10 may include a plurality of RF chains. Furthermore, the RF processor 5-10 may perform beamforming. To perform the beamforming, the RF processor 5-10 may adjust the phase and size of each of signals transmitted or received through a plurality of antennas or antenna elements. In addition, the RF processor may perform MIMO, and may receive several layers when a MIMO operation is performed.

The baseband processor 5-20 performs a function of conversion between a baseband signal and a bitstream according to a physical layer protocol of a system. For example, when data is transmitted, the baseband processor 5-20 generates complex symbols by encoding and modulating a transmission bitstream. In addition, when data is received, the baseband processor 5-20 reconstructs a reception bitstream by demodulating and decoding the baseband signal provided from the RF processor 5-10. For example, in a case where an orthogonal frequency division multiplexing (OFDM) scheme is applied, when data is transmitted, the baseband processor 5-20 generates complex symbols by encoding and modulating a transmission bitstream, maps the complex symbols to subcarriers, and then constitutes OFDM symbols through inverse fast Fourier transform (IFFT) calculation and cyclic prefix (CP) insertion. In addition, when data is received, the baseband processor 5-20 divides a baseband signal provided from the RF processor 5-10, by the units of OFDM symbols, reconstructs signals mapped to subcarriers, through fast Fourier transform (FFT), and then reconstructs a reception bitstream through demodulation and decoding.

The baseband processor 5-20 and the RF processor 5-10 transmit and receive a signal as described above. Accordingly, the baseband processor 5-20 and the RF processor 5-10 may be called a transmitter, a receiver, a transceiver, a transceiving device, or a communicator. Furthermore, at least one of the baseband processor 5-20 and the RF processor 5-10 may include a plurality of communication modules to support a plurality of different wireless access technologies. In addition, at least one of the baseband processor 5-20 and the RF processor 5-10 may include different communication modules to process signals in different frequency bands. For example, the different wireless access technologies may include wireless LAN (e.g., IEEE 802.11), a cellular network (e.g., LTE), etc. Furthermore, the different frequency bands may include a super high frequency (SHF) (e.g., 2.NRHz, NRhz) band, a millimeter (mm) wave (e.g., 60 GHz) band, etc.

The storage 5-30 stores data such as a basic program, an application program, and configuration information for an operation of the terminal. Particularly, the storage 5-30 may store information related to a second access node that performs wireless communication by using a second wireless access technology. The storage 5-30 provides stored data in response to a request of the controller 5-40.

The controller 5-40 controls overall operations of the terminal. For example, the controller 5-40 transmits or receives a signal via the baseband processor 5-20 and the RF processor 5-10. In addition, the controller 5-40 records and reads data in and from the storage 5-40. To this end, the controller 5-40 may include at least one processor. For example, the controller 5-40 may include a communication processor (CP) performing a control for communication, and an application processor (AP) controlling a higher layer, such as an application program. In addition, the controller 5-40 may control an operation of a terminal according to various embodiments of the disclosure or an entity corresponding thereto.

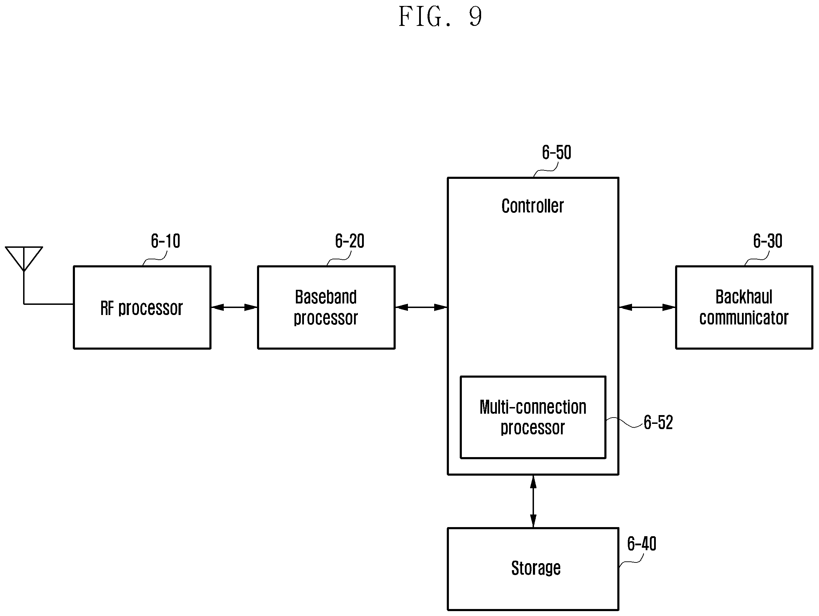

FIG. 9 is a block diagram illustrating a structure of a base station according to an embodiment of the disclosure.

As illustrated in the diagram, the base station may include an RF processor 6-10, a baseband processor 6-20, a backhaul communicator 6-30, a storage 6-40, and a controller 6-50. The controller 6-50 may further include a multi-connection processor 6-52.

The RF processor 6-10 performs a function, such as signal band change, amplification, etc., for transmitting or receiving a signal through a wireless channel. That is, the RF processor 6-10 upconverts a baseband signal provided from the baseband processor 6-20, into an RF band signal, and then transmits the RF band signal through an antenna, and downconverts the RF band signal received through the antenna, into a baseband signal. For example, the RF processor 6-10 may include a transmission filter, a reception filter, an amplifier, a mixer, an oscillator, a DAC, an ADC, and the like. In the diagram, only one antenna is illustrated, but the first access node may include a plurality of antennas. In addition, the RF processor 6-10 may include a plurality of RF chains. Furthermore, the RF processor 6-10 may perform beamforming. To perform the beamforming, the RF processor 6-10 may adjust the phase and size of each of signals transmitted or received via a plurality of antennas or antenna elements. The RF processor may perform a downlink MIMO operation by transmitting one or more layers.

The baseband processor 6-20 performs a function of conversion between a baseband signal and a bitstream according to a physical layer protocol of a first wireless access technology. For example, when data is transmitted, the baseband processor 6-20 generates complex symbols by encoding and modulating a transmission bitstream. In addition, when data is received, the baseband processor 6-20 reconstructs a reception bitstream by demodulating and decoding a baseband signal provided from the RF processor 6-10. For example, in a case where an OFDM scheme is applied, when data is transmitted, the baseband processor 6-20 generates complex symbols by encoding and modulating a transmission bitstream, maps the complex symbols to subcarriers, and then constitutes OFDM symbols through IFFT calculation and CP insertion. In addition, when data is received, the baseband processor 6-20 divides a baseband signal provided from the RF processor 6-10, by the units of OFDM symbols, reconstructs signals mapped to subcarriers, through FFT calculation, and then reconstructs a reception bitstream through demodulation and decoding. The baseband processor 6-20 and the RF processor 6-10 transmit and receive a signal as described above. Accordingly, the baseband processor 6-20 and the RF processor 6-10 may be called a transmitter, a receiver, a transceiver, a transceiving unit, a communication unit, or a wireless communication unit.

The backhaul communicator 6-30 provides an interface for performing communication with other nodes within a network. That is, the backhaul communicator 6-30 converts, into a physical signal, a bitstream transmitted from the base station to another node, for example, an auxiliary base station, a core network, etc., and converts a physical signal received from the other node, into a bitstream.

The storage 6-40 stores data such as a basic program, an application program, and configuration information for an operation of the base station. Particularly, the storage 6-40 may store information on a bearer assigned to a connected terminal, a measurement result reported from a connected terminal, etc. In addition, the storage 6-40 may store information serving as a determination criterion of whether to provide or stop providing multi-connection to a terminal. The storage 6-40 provides stored data in response to a request of the controller 6-50.

The controller 6-50 controls overall operations of the base station. For example, the controller 6-50 transmits or receives a signal via the baseband processor 6-20 and the RF processor 6-10, or via the backhaul communicator 6-30. In addition, the controller 6-50 records and reads data in and from the storage 6-40. To this end, the controller 6-50 may include at least one processor. In addition, the controller 6-50 may control an operation of a base station according to various embodiments of the disclosure or an entity corresponding thereto.

Meanwhile, the embodiments of the disclosure described with reference to the present specification and the drawings are merely illustrative of specific examples to easily facilitate description and understanding of the disclosure and are not intended to limit the scope of the disclosure. It is obvious to those skilled in the art that other modifications based on the technical spirit of the disclosure can be implemented.

Also, the embodiments of the disclosure described and shown in the specification and the drawings are merely specific examples that have been presented to easily explain the contents of the disclosure and help understanding of the disclosure, and are not intended to limit the scope of the disclosure. Therefore, it should be construed that, in addition to the embodiments disclosed herein, all changes or changed forms derived from the technical idea of the disclosure fall within the scope of the disclosure.

## Claims

1. A method for controlling a master node (MN) in a wireless communication system, comprising:
in case where conditional primary secondary cell group (SCG) cell (PSCell) change (CPC) is previously configured for a terminal, and if a secondary node (SN) configuration is updated in a source SN, receiving a first message including information on updated SN configuration and a CPC configuration update indication;
updating MN configuration information previously configured based on the updated SN configuration information;
transmitting a second message requesting a target SN that operates a candidate target pscell for the terminal for which the CPC is previously configured to update the CPC configuration for the candidate target pscell, based on the CPC configuration update indication included in the first message, wherein the second message includes the CPC configuration update indication; and
receiving a third message including the updated CPC configuration information from the target SN in case where the CPC configuration for the candidate target pscell is updated by the target SN.

2. The method of claim 1, further comprising transmitting, to the terminal, a fourth message including the updated SN configuration information, updated MN configuration information, the updated CPC configuration information, and master cell group (MCG) configuration information updated based on the updated CPC configuration information.

3. The method of claim 1, wherein the second message further includes information on the updated SN configuration received from the SN, and
wherein the CPC configuration previously configured for the candidate target pscell is updated based on the information on the updated SN configuration by the target SN.

4. The method of claim 1, wherein the third message includes the CPC configuration information updated for a first candidate pscell in case where the CPC configuration is updated for the first candidate target pscell, and includes an indication indicating that the CPC configuration information is not updated for a second candidate pscell in case where the CPC configuration information is not updated for the second candidate target pscell.

5. A method for controlling a source secondary node (SN) in a wireless communication system, comprising:
updating SN configuration in a source SN in case where conditional primary secondary cell group (SCG) cell (PSCell) change (CPC) is previously configured for a terminal; and
transmitting, to a master node (MN), a first message including information on updated SN configuration and a CPC configuration update indication,
wherein if MN configuration information previously configured is updated based on information on the updated SN configuration, a second message requesting a target SN that operates a candidate target pscell for the terminal for which the CPC is previously configured to update the CPC configuration for the candidate target pscell is transmitted based on the CPC configuration update indication included in the first message, wherein the second message includes the CPC configuration update indication, and a third message including the updated CPC configuration information from the target SN is transmitted to the MN, in case where the CPC configuration for the candidate target pscell is updated by the target SN.

6. The method of claim 5, further comprising transmitting, to the terminal, a fourth message including the updated SN configuration information, updated MN configuration information, the updated CPC configuration information, and master cell group (MCG) configuration information updated based on the updated CPC configuration information.

7. The method of claim 5, wherein the second message further includes information on the updated SN configuration received from the SN, and
wherein the CPC configuration previously configured for the candidate target pscell is updated based on the information on the updated SN configuration by the target SN.

8. The method of claim 1, wherein the third message includes the CPC configuration information updated for a first candidate pscell in case where the CPC configuration is updated for the first candidate target pscell, and includes an indication indicating that the CPC configuration information is not updated for a second candidate pscell in case where the CPC configuration information is not updated for the second candidate target pscell.

9. A master node (MN) in a wireless communication system, comprising:
a transceiver; and
a controller controlled to:
in case where conditional primary secondary cell group (SCG) cell (PSCell) change (CPC) is previously configured for a terminal, and if a secondary node (SN) configuration is updated in a source SN, receive a first message including information on updated SN configuration and a CPC configuration update indication, through the transceiver;
update MN configuration information previously configured based on the updated SN configuration information;
transmit a second message requesting a target SN that operates a candidate target pscell for the terminal for which the CPC is previously configured to update the CPC configuration for the candidate target pscell, based on the CPC configuration update indication included in the first message, through the transceiver, wherein the second message includes the CPC configuration update indication; and
receive a third message including the updated CPC configuration information from the target SN through the transceiver, in case where the CPC configuration for the candidate target pscell is updated by the target SN.

10. The MN of claim 9, wherein the controller to transmit, to the terminal, a fourth message including the updated SN configuration information, updated MN configuration information, the updated CPC configuration information, and master cell group (MCG) configuration information updated based on the updated CPC configuration information, through the transceiver.

11. The MN of claim 9, wherein the second message further includes information on the updated SN configuration received from the SN, and
wherein the CPC configuration previously configured for the candidate target pscell is updated based on the information on the updated SN configuration by the target SN.

12. The MN of claim 9, wherein the third message includes the CPC configuration information updated for a first candidate pscell in case where the CPC configuration is updated for the first candidate target pscell, and includes an indication indicating that the CPC configuration information is not updated for a second candidate pscell in case where the CPC configuration information is not updated for the second candidate target pscell.

13. A source secondary node (SN) in a wireless communication system, comprising:
a transceiver; and
a controller controlled to update SN configuration in a source SN in case where conditional primary secondary cell group (SCG) cell (PSCell) change (CPC) is previously configured for a terminal, and transmit, to a master node (MN), a first message including information on updated SN configuration and a CPC configuration update indication, through the transceiver,
wherein if MN configuration information previously configured is updated based on information on the updated SN configuration, a second message requesting a target SN that operates a candidate target pscell for the terminal for which the CPC is previously configured to update the CPC configuration for the candidate target pscell is transmitted based on the CPC configuration update indication included in the first message, wherein the second message includes the CPC configuration update indication, and a third message including the updated CPC configuration information from the target SN is transmitted to the MN, in case where the CPC configuration for the candidate target pscell is updated by the target SN.

14. The source SN of claim 13, wherein a fourth message including the updated SN configuration information, updated MN configuration information, the updated CPC configuration information, and master cell group (MCG) configuration information updated based on the updated CPC configuration information is transmitted to the terminal,
wherein the second message further includes information on the updated SN configuration received from the SN, and
wherein the CPC configuration previously configured for the candidate target pscell is updated based on the information on the updated SN configuration by the target SN.

15. The source SN of claim 13, wherein the third message includes the CPC configuration information updated for a first candidate pscell in case where the CPC configuration is updated for the first candidate target pscell, and includes an indication indicating that the CPC configuration information is not updated for a second candidate pscell in case where the CPC configuration is not updated for the second candidate target pscell.
